# FASCICULE DE BREVET EUROPEEN

(11) **EP 2 769 798 B1**
(45) Date de publication et mention de la délivrance du brevet: **20.07.2016**
(21) Numéro de dépôt: 14305108.4
(22) Date de dépôt: 27.01.2014
(51) Int. Cl.: B23K 11/30, B23B 5/16

(54) **Fraise de rodage pour électrodes de soudage**
Fräser für Punktschweisselektroden
dressing cutter for welding electrodes

(30) Priorité: 25.02.2013 FR 1351621
(43) Date de publication de la demande: 27.08.2014
(73) Titulaire: A.M.D.P., 78290 Croissy sur Seine (FR)
(72) Inventeur: Truquin, Aurélien, 78711 Mantes la ville (FR)
(74) Mandataire: Mazabraud, Xavier

(56) Documents cités:
- WO-A1-2009/004546
- DE-U1-202008 007 251

## Description

La présente invention concerne une fraise de rodage amovible pour le rodage d'électrodes d'appareils de soudage par points par résistance, manuel, à poste fixe ou portés par des robots, permettant de limiter la consommation de matière de l'électrode, comme connu du document DE 202008007251 U.

D'une façon générale, on sait qu'il a déjà été proposé, notamment par la demande de brevet n° FR 95 10645 et par la demande de brevet n° FR 96 14505 au nom de la Demanderesse, une fraise de rodage présentant un corps sensiblement cylindrique venant se monter, de façon amovible, dans une couronne porte-outils couplée à un moteur ou à un dispositif de roue libre associé à un levier d'actionnement, ou à tout autre dispositif d'entraînement.

Ce corps cylindrique comprend une face radiale concave en forme de cuvette dans laquelle débouche au moins une cavité prismatique axialement traversante, en forme de secteur circulaire.

La fraise de rodage comprend en outre au moins une lame tranchante amovible réalisée en une matière plus dure que le corps, conformée de manière à s'appliquer et se fixer, de façon démontable, contre une face radiale de la cavité prismatique.

Cette lame présente une arête coupante avec une dépouille plus ou moins importante ; cette arrête est en saillie par rapport à la concavité sa la forme correspond au profil de l'embout que l'on désire roder.

Bien entendu, dans le cas où la fraise de rodage est destinée à effectuer un rodage in situ des électrodes (sans démontage de celles-ci), la fraise de rodage peut être double de manière à pouvoir traiter à la fois les deux électrodes coaxiales d'une même pince. Dans ce cas, les deux faces radiales du corps présentent deux concavités coaxiales symétriques par rapport à un plan médian de symétrie. La lame comprend, quant à elle, deux arêtes tranchantes sensiblement symétriques par rapport audit plan.

Cependant, un rodage pouvant être nécessaire, par exemple tous les 400 points de soudure pour de la tôle d'acier, cela implique une forte consommation du cuivre de l'électrode, et donc un coût important de matière, et aussi un nombre important d'interruptions en vue du changement de chaque électrode usagée. Dans le cas du soudage d'aluminium, les rodages sont encore plus fréquents, par exemple tous les 20 à 25 points, à cause notamment des dépôts d'alumine sur l'électrode, qui dégradent rapidement la qualité de soudure ; le coût de cuivre est alors tel qu'il peut remettre en cause l'utilisation de ce procédé d'assemblage pour l'aluminium.

L'invention a donc plus particulièrement pour but de supprimer ces inconvénients. Notamment, l'invention a pour but de prévoir un procédé et un dispositif pour limiter la consommation de la matière d'une électrode de soudage par point.

A cet effet, elle propose une fraise de rodage pour électrode de soudage par points selon la revendication 1.

De préférence, les moyens de rodage privilégié comprennent une distance axiale, entre le fond de la cuvette et le dessus de la lame, qui varie de sorte que le copeau retiré est plus important sur le flanc que sur l'extrémité de l'électrode ; avantageusement, le copeau peut être nul sur l'embout, notamment pour un soudage dit « black spot ». La distance est avantageusement plus petite à mesure où on s'éloigne du centre.

Une telle fraise comprend avantageusement un plateau radial formé au voisinage du centre de la concavité. Ce plateau peut être formé, au moins en partie, par une base de chaque lame. Il peut en outre être formé par une partie de la cuvette, voisine de la base des lames. Une lame peut comprendre une dépression formée dans sa base. La dépouille de la base est de préférence sensiblement nulle. Ainsi, la pointe de l'électrode est sensiblement épargnée au moment du rodage.

La concavité de la fraise forme selon l'invention un épaulement au-dessus d'une rampe de la lame, la hauteur, dudit épaulement, c'est-à-dire le détalonnage, diminuant à mesure où la rampe s'élève. De préférence, le long de la rampe, la hauteur de la ligne de coupe relativement à la base de l'épaulement (40) est supérieure à la hauteur dudit épaulement, c'est-à-dire au détalonnage.

Selon l'invention, la rampe de la lame forme une contre-dépouille qui varie de telle façon à ce que la découpe soit plus agressive sur le flan qu'à la pointe de l'électrode. Ainsi, de préférence, la contre-dépouille diminue à mesure à mesure où on s'éloigne de l'axe.

Un mode d'exécution de l'invention sera décrit ci-après, à titre d'exemple non limitatif, avec référence aux dessins annexés dans lesquels :
- La figure 1 est une vue en perspective schématique d'une fraise de rodage double ;
- La figure 2 est une vue de dessus de la face supérieure de la fraise de rodage représentée figure 1, illustrant les plans de coupe des figures 4 à 7 ;
- la figure 3 représente des détails des coupes des figures 4 à 7, dans le plan desdites coupes, illustrant pour chacune d'elle, les distances entre la lame et la cuvette, ainsi que la dépouille de la lame, à l'endroit de la coupe ; et,
- Les figures 4 à 7 sont des vues en perspective de coupes parallèles entre elles, chacune à une distance respective d'un axe de la fraise de rodage de la figure 1 et transversale à l'arête des lames.

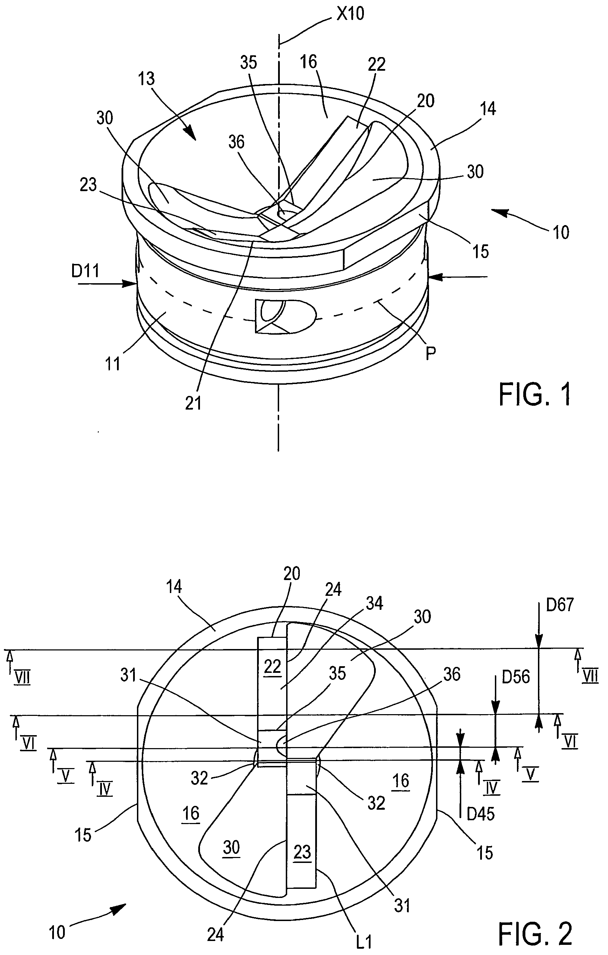

La figure 1 illustre une fraise de rodage double 10 pour électrodes de soudage par point. La fraise 10 comprend un corps 11 sensiblement cylindrique autour d'un axe principal X10. La fraise est sensiblement symétrique relativement à un plan radial P, illustré en pointillés à la figure 1. De part et d'autre du plan de symétrie P, la fraise comprend des moyens de rodage 13. Pour une pince de soudage comprenant deux électrodes, un serrage effectué par la pince provoque l'engagement de chacune des électrodes avec des moyens de rodage respectifs, de sorte que la fraise se trouve, en quelque sorte, pincée par les deux électrodes. A la figure 1, on voit, sur la partie supérieure de la fraise, des moyens de rodage 13 destinés à l'une des électrodes.

Le corps cylindrique 11 est par exemple en acier. La fraise comprend en outre une couronne d'entraînement 14 dans laquelle sont formés deux méplats d'entrainement 15 ; la couronne 14 s'étendant radialement depuis une extrémité supérieure du corps 11. La couronne 14 permet l'entraînement en rotation de la fraise de rodage 10 et provoque le rodage simultané des deux électrodes. Les faces supérieure et inférieure de la fraise 10 sont sensiblement identiques entre elles. On va donc décrire uniquement la face supérieure, visible aux figures 1 et 2.

Chaque face présente une concavité en forme de cuvette 16. La fraise de rodage 10 comprend en outre deux fentes axialement traversantes 20, 21, de section rectangulaire, diamétralement opposées par rapport à l'axe de la fraise. Ces deux fentes 20, 21 qui débouchent au niveau des deux concavités s'étendent radialement à partir de l'axe central de la fraise sur une distance inférieure au rayon de la fraise, jusqu'au niveau de la couronne 14.

Dans chacune de ces fentes 20, 21 s'engage une lame 22, 23 de section complémentaire, comprenant deux arêtes coupantes 24 dont la forme correspond sensiblement à un demi-profil de l'embout de l'électrode que l'on veut roder. Chacune des deux arêtes 24, formant ligne de coupe, d'une même lame s'étend en saillie par rapport à la paroi d'une concavité 16, inférieure ou supérieure, respective. La ligne de coupe est ainsi à une distance D24 de cette paroi. Les lames 22,23 se chevauchent, c'est à dire qu'elles sont en recouvrement latéral mutuel au centre de chaque cuvette 16.

Chacune des faces concaves de la fraise de rodage comprend dans une région adjacente à chaque lame, une empreinte concave respective 30 présentant, dans un plan radial, une section en forme de secteur circulaire partant depuis l'axe central de la fraise. Chacune des empreintes est borgne (non traversante), et présente dans le plan axial un profil incurvé dont la profondeur, relativement à la face principale, s'accroît en partant du centre du corps puis, après passage par un maximum, décroît ensuite jusqu'au niveau de la paroi cylindrique du corps. Ces empreintes 30 permettent l'extraction radiale des copeaux formés lors du rodage et d'éviter tout phénomène de bourrage et donc toute imprécision du rodage due à un tel bourrage.

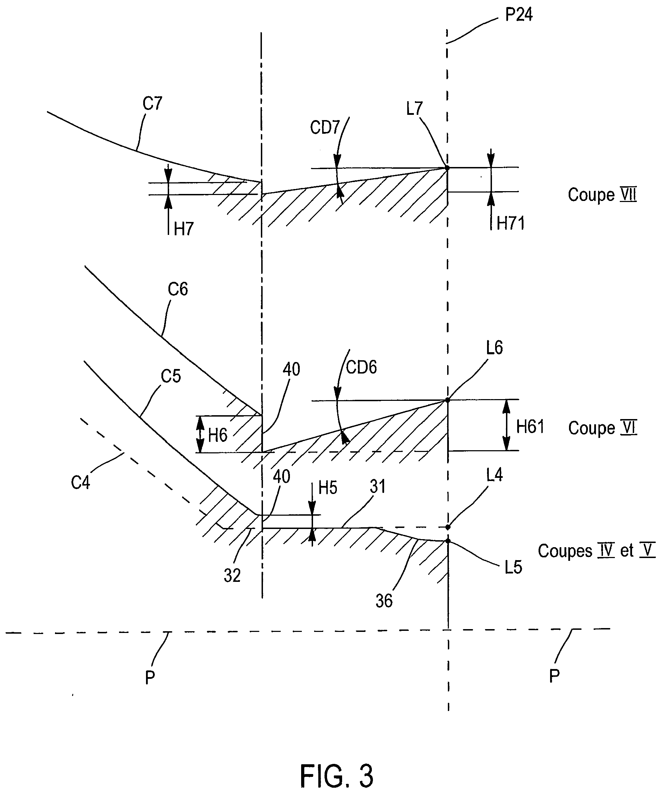

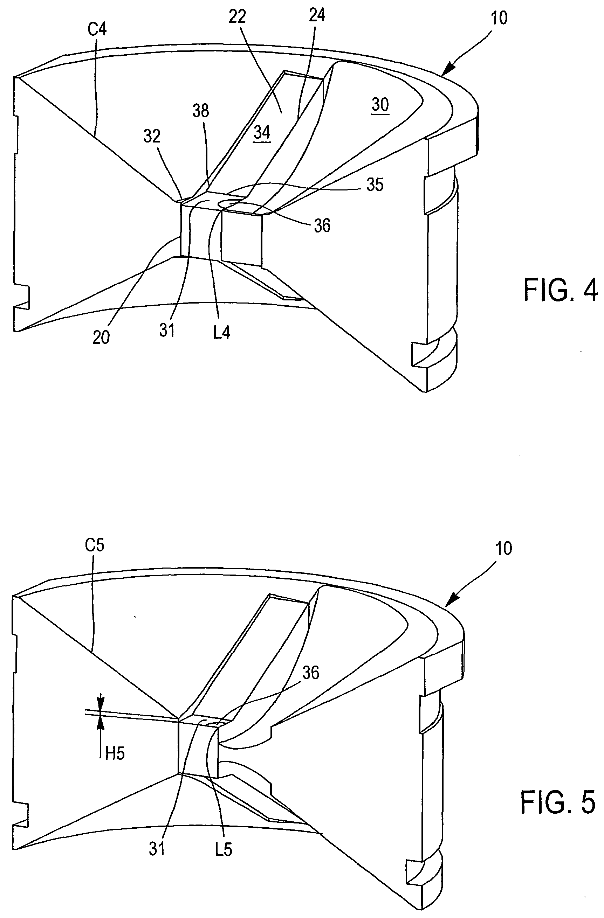

On va maintenant décrire l'invention en référence aux coupes des figures 4 à 7 et plus particulièrement en référence aux détails de la figure 3. Les coupes sont réalisées parallèlement à l'axe X10 du corps, transversalement à l'une des lames 22, perpendiculairement au plan axial de l'arrête 24 correspondante.

Dans l'exemple illustré, le corps 11 a un diamètre extérieur D11 sensiblement égal à 40mm. Les positions des coupes verticales IV-IV, V-V, VI-VI, VII-VII, respectivement illustrées aux figures 4 à 7, sont repérées en vue de dessus sur la figure 2 et en élévation sur la figure 3.

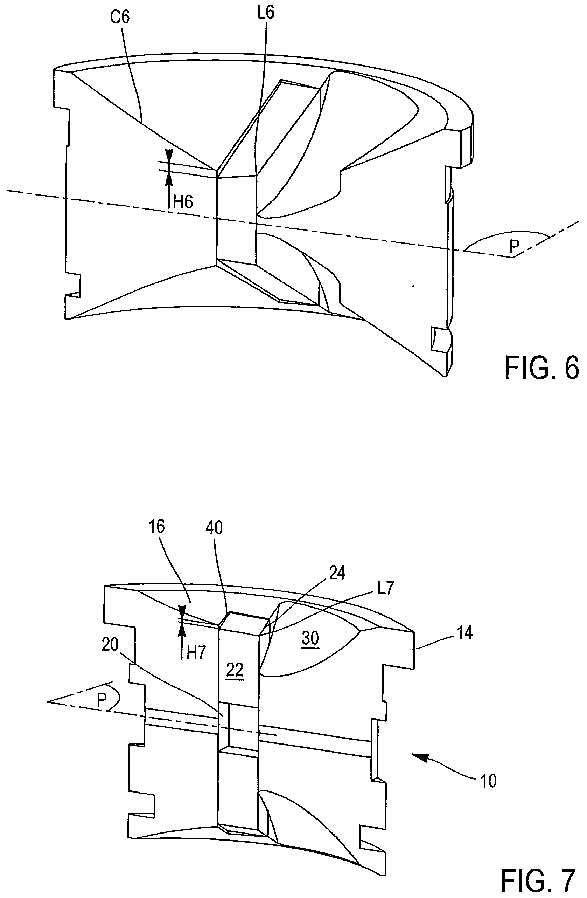

La coupe IV-IV de la figure 4 est réalisée à une distance de 0,2 mm, au-delà de l'axe X10 ; la coupe V-V de la figure 5 est réalisée à une distance D45 = 1,7 mm au-delà de celle de la figure 4 ; la coupe VI-VI de la figure 6 est réalisée à une distance D56 = 4mm au-delà de celle de la figure 5; et, la coupe VII-VII de la figure 7 est réalisée à une distance de D67 = 8mm au-delà de celle de la figure 6. A la figure 3, la coupe de la figure 4 est représentée en pointillés, les autres coupes en traits pleins. La trace du plan de symétrie P est représentée en trait pointillés horizontaux. La trace du plan axial P24 contenant l'arête 24 y est représentée en traits pointillés verticaux.

Comme illustré aux figures 4 et 5, chaque lame 22,23 comprend une base 31 qui forme, avec des zones voisines 32 de la cuvette et à proximité de l'axe X10, un plateau perpendiculaire à l'axe X0 ; c'est à dire que dans la zone du plateau 31,32, la dépouille de la lame est nulle ; ainsi, au droit de la coupe IV-IV, le profil C4 de la cuvette 16 ne forme aucun épaulement avec la base 31 de la lame.

Au droit de la coupe V-V, la base 31 de la lame forme une légère dépression 36. Le profil C5 de la cuvette 16 y forme un épaulement de hauteur H5 avec la base 31 de la lame. La dépouille de la lame y est nulle.

Au-delà de la base 31, la lame forme une rampe 34 qui va en s'élevant à mesure qu'elle s'éloigne de l'axe X10. La base 31 et la rampe formant entre elles une ligne de jonction 35 (voir figures 1 et 2).

Au droit de la coupe VI-VI, la rampe 34 de la lame forme avec le profil C6 de la cuvette 16 un épaulement 40 de hauteur H6, telle que H6 est supérieure à celle H5 de l'épaulement de la coupe V-V. En outre, la lame présente une contre-dépouille H61 de telle sorte qu'au droit de la coupe VI-VI, le point L6 de la ligne de coupe est plus haut que l'épaulement, c'est-à-dire que la hauteur H61 du point de coupe L6 au-dessus de la base de l'épaulement 40 y est supérieure à la hauteur H6 de cet épaulement à l'endroit de la coupe, donc H61>H6.

Au droit de la coupe VII-VII, la rampe 34 de la lame forme avec le profil C7 de la cuvette 16 un épaulement 40 de hauteur H7, telle que H7 est inférieur à celle H6 de l'épaulement de la coupe V-V. En outre, la lame présente une contre-dépouille CD7, de telle sorte qu'au droit de la coupe VII-VII, le point L7 de la ligne de coupe est plus haut que l'épaulement, c'est-à-dire que la hauteur H71 du point de coupe L7 au-dessus de la base de l'épaulement 40 y est supérieure à la hauteur H6 de cet épaulement à l'endroit de la coupe, donc H71>H7.

Les hauteurs H5, H6, H7 de l'épaulement 40 sont généralement appelées détalonnage.

Ainsi, dans la zone 32 de la cuvette, au voisinage de l'axe X10, il n'y a ni épaulement ni dépouille ou contre dépouille de la lame. La dépouille reste nulle jusqu'à la jonction 35, tandis qu'à mesure où l'on s'éloigne de l'axe X10 un épaulement 40 se forme et atteint le maximum de sa hauteur sensiblement au droit de la jonction 35. L'épaulement 40 diminue ensuite progressivement lorsqu'on s'éloigne de la base 31 le long de la rampe 34. Une telle disposition permet de maîtriser l'épaisseur du copeau ; ainsi, le copeau sera plus important à mesure où on s'éloigne de l'axe X10, c'est à dire qu'il sera plus important sur le flan de l'électrode qu'au niveau de sa pointe, la pointe reposant sur le plateau 31, 32. La contre-dépouille aussi varie le long de la rampe, de sorte que la découpe est plus agressive sur le flanc qu'au voisinage de la pointe de l'électrode.
Le détalonnage H5, H6, H7 de la fraise, c'est à dire l'écart entre la lame et la cuvette de guidage, permet de maîtriser l'enlèvement de matière. L'épaisseur enlevée peut notamment être déterminée à l'avance grâce à un dispositif prenant en outre en compte le nombre de tours, l'effort de serrage de la pince à souder et/ou la vitesse de rotation de la fraise de rodage.

De préférence, le matériau utilisé pour les lames est du type HSS ou carbure, pour du soudage d'acier ; Un carbure plus fin peut être utilisé pour souder de l'aluminium afin d'avoir un rendu poli de la face active de l'électrode.

Bien entendu, l'invention n'est pas limitée aux exemples décrits. Ainsi, la fraise peut être simple, au lieu de double.

## Revendications

1. Fraise de rodage (10) pour une électrode de soudage par point dont le corps (11) comprend au moins une face présentant une concavité (16) en forme de cuvette sensiblement complémentaire de celle de l'embout de l'électrode que l'on désire roder ; une fente (20,21) radiale débouchant dans ladite concavité (16) et recevant une lame tranchante (22, 23) de forme sensiblement complémentaire dont l'arête (24) s'étend à distance de la paroi de la concavité,
**caractérisée en ce que** ladite concavité (16) forme un épaulement (40) au-dessus d'une rampe (34) de la lame, la hauteur (H5-H7) dudit épaulement (40) diminuant à mesure où la rampe s'élève, ladite rampe(34) de la lame formant une contre-dépouille (C6, CD7) qui varie de telle façon que la découpe est plus agressive sur le flan qu'à la pointe de l'électrode.

2. Fraise de rodage selon la revendication 1, **caractérisée en ce qu'**elle comprend un plateau radial (31,32), formé au voisinage du centre de la concavité (16).

3. Fraise de rodage selon la revendication 2, **caractérisée en ce qu'**elle comprend une deuxième fente radiale débouchant dans ladite concavité (16) et recevant une deuxième lame tranchante (23) de forme sensiblement complémentaire dont l'arête (24) s'étend à une distance de la paroi de la concavité, le plateau étant formé au moins en partie par une base (31) de chaque lame.

4. Fraise de rodage selon la revendication 3, **caractérisée en ce que** le plateau est en outre formé par une partie (32) de la cuvette, voisine de la base des lames.

5. Fraise de rodage selon l'une des revendications 2 à 4, **caractérisée en ce qu'**au moins une lame comprend une dépression (36) formée dans sa base.

6. Fraise de rodage selon l'une des revendications 2 à 5, **caractérisée en ce que** la dépouille de la base (31) de la lame est sensiblement nulle.

7. Fraise de rodage selon l'une des revendications 1 à 6, **caractérisée en ce que**, le long de la rampe, la hauteur (H61, H71) de la ligne de coupe (L6, L7) relativement à la base de l'épaulement (40) est supérieure à la hauteur (H6, H7) dudit épaulement.

8. Fraise de rodage selon l'une des revendications 1 à 7, **caractérisée en ce que** la contre-dépouille (C6, CD7) diminue à mesure à mesure où on s'éloigne de l'axe (X10).

## Patentansprüche

1. Fräswerkzeug zum Läppen (10) für eine Punktschweißelektrode, dessen Körper (11) mindestens eine Fläche umfasst, die eine Aushöhlung (16) mit der Form einer Schale im Wesentlichen komplementär zu der Form der Kuppe der Elektrode aufweist, die geläppt werden soll, wobei ein radialer Spalt (20, 21) in die Aushöhlung (16) mündet und eine scharfe Klinge (22, 23) mit einer im Wesentlichen komplementären Form aufnimmt, deren Kante (24) sich mit Abstand zu der Wand der Aushöhlung erstreckt,
**dadurch gekennzeichnet, dass** die Aushöhlung (16) eine Schulter (40) oberhalb einer geneigten Fläche (34) der Klinge bildet, wobei die Höhe (H5-H7) der Schulter (40) in dem Maße abnimmt, in dem die geneigte Fläche ansteigt, wobei die geneigte Fläche (34) der Klinge eine Formschräge (C6, CD7) bildet, die so variiert, dass der Schnitt auf der Flanke der Elektrode aggressiver als bei der Spitze ist.

2. Fräswerkzeug zum Läppen nach Anspruch 1, **dadurch gekennzeichnet, dass** es ein radiales Plateau (31, 32) umfasst, das in der Nähe der Mitte der Aushöhlung (16) ausgebildet ist.

3. Fräswerkzeug zum Läppen nach Anspruch 2, **dadurch gekennzeichnet, dass** es einen zweiten radialen Spalt umfasst, der in die Aushöhlung (16) mündet und eine zweite scharfe Klinge (23) mit im Wesentlichen komplementärer Form aufnimmt, deren Kante (24) sich mit einem Abstand zu der Wand der Aushöhlung erstreckt, wobei das Plateau mindestens teilweise durch eine Basis (31) jeder Schneide gebildet ist.

4. Fräswerkzeug zum Läppen nach Anspruch 3, **dadurch gekennzeichnet, dass** das Plateau außerdem aus einem Teil (32) der Schale gebildet ist, nahe der Basis der Schneiden.

5. Fräswerkzeug zum Läppen nach einem der Ansprüche 2 bis 4, **dadurch gekennzeichnet, dass** mindestens eine Schneide eine Vertiefung (36) aufweist, die in ihrer Basis ausgebildet ist.

6. Fräswerkzeug zum Läppen nach einem der Ansprüche 2 bis 5, **dadurch gekennzeichnet, dass** die Schräge der Basis (31) der Schneide im Wesentlichen Null ist.

7. Fräswerkzeug zum Läppen nach einem der Ansprüche 1 bis 6, **dadurch gekennzeichnet, dass** entlang der geneigten Fläche die Höhe (H61, H71) der Schneidlinie (L6, L7), bezogen auf die Basis der Schulter (40), größer als die Höhe (H6, H7) der Schulter ist.

8. Fräswerkzeug zum Läppen nach einem der Ansprüche 1 bis 7, **dadurch gekennzeichnet, dass** die Formschräge (C6, CD7) in dem Maße abnimmt, in dem man sich von der Achse (X10) entfernt.

## Claims

1. Lapping cutter (10) for a spot welding electrode, the body (11) of which comprises at least one face having a concavity (16) in the form of a bowl substantially complementary to that of the tip of the electrode that it is wished to lap; a radial slot (20, 21) emerging in said concavity (16) and receiving a cutting blade (22, 23) with a substantially complementary form (24), the edge of which extends at a distance from the wall of the concavity, and means for favouring lapping of the flank of the electrode, **characterised in that** said concavity (16) forms a shoulder (40) above a slope (34) of the blade, the height (H5-H7) of said shoulder (40) decreasing as the slope rises, said slope (34) of the blade forms an undercut (C6, CD7) that varies so that the cut is more aggressive on the flank than at the tip of the electrode.

2. Lapping cutter according to claim 1, **characterised in that** it comprises a radial platform (31, 32) formed in the vicinity of the centre of the concavity (16).

3. Lapping cutter according to claim 2, **characterised in that** it comprises a second radial slot emerging in said concavity (16) and receiving a second cutting blade (23) with a substantially complementary form, the edge (24) of which extends at a predetermined distance from the wall of the concavity, the platform being formed at least partly by a base (31) of each blade.

4. Lapping cutter according to claim 3, **characterised in that** the platform is also formed by a part (32) of the bowl, adjacent to the base of the blades.

5. Lapping cutter according to one of claims 2 to 4, **characterised in that** at least one blade comprises a recess (36) formed in its base.

6. Lapping cutter according to one of claims 2 to 5, **characterised in that** the relief of the base (31) of the blade is substantially zero.

7. Lapping cutter according to one of claims 1 to 6, **characterised in that**, along the slope, the height (H61, H71) of the cutting line (L6, L7) relative to the base of the shoulder (40) is greater than the height (H6, H7) of said shoulder.

8. Lapping cutter according to one of claims 1 to 7, **characterised in that** the undercut (C6, CD7) decreases moving away from the axis (X10).
